(19) Europäisches Patentamt
European Patent Office
Office européen des brevets

(11) **EP 1 863 659 B1**

(12) **EUROPÄISCHE PATENTSCHRIFT**

(45) Veröffentlichungstag und Bekanntmachung des Hinweises auf die Patenterteilung:
**13.05.2009 Patentblatt 2009/20**

(21) Anmeldenummer: **06723457.5**

(22) Anmeldetag: **15.03.2006**

(51) Int Cl.:
**B60G 17/00** $^{(2006.01)}$    **G01G 19/00** $^{(2006.01)}$

(86) Internationale Anmeldenummer:
**PCT/EP2006/002393**

(87) Internationale Veröffentlichungsnummer:
**WO 2006/102993 (05.10.2006 Gazette 2006/40)**

(54) **VERFAHREN ZUR BESTIMMUNG DER MASSE EINES FAHRZEUGS**

METHOD FOR DETERMINING THE MASS OF A VEHICLE

PROCEDE POUR DETERMINER LA MASSE D'UN VEHICULE

(84) Benannte Vertragsstaaten:
**DE FR GB**

(30) Priorität: **31.03.2005 DE 102005014569**

(43) Veröffentlichungstag der Anmeldung:
**12.12.2007 Patentblatt 2007/50**

(73) Patentinhaber: **Bayerische Motoren Werke Aktiengesellschaft**
**80809 München (DE)**

(72) Erfinder: **FRÖHLICH, Martin**
**85354 Freising (DE)**

(56) Entgegenhaltungen:
EP-A- 0 678 737        EP-A- 0 808 733
DE-A1- 4 218 087       DE-A1- 4 325 413
DE-A1- 10 318 005      DE-A1-1102004 024
95
US-A- 5 931 879        US-A- 6 157 295
US-B1- 6 819 979

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Bestimmung der Masse eines Fahrzeugs oder eines radindividuellen Massenanteils eines Fahrzeugs mit einer Vertikalbewegungen zwischen dem Fahrzeug-Aufbau und den Fahrzeug-Rädern ermöglichenden Radaufhängung, wobei die Massen-Schätzung mittels eines auf der Vertikaldynamik des Fahrzeugs basierenden Zustandsbeobachters durchgeführt wird.

Viele Regelungssysteme eines Kraftfahrzeugs und insbesondere die Fahrwerkregelsysteme benötigen die Fahrzeugmasse als Parameter in den Regelungsalgorithmen. Da die Fahrzeugmasse von der Beladung des Fahrzeugs abhängt, werden in den entsprechenden Regelungsalgorithmen entweder stets die nominellen Massenwerte verwendet, oder Verfahren eingesetzt, mit denen es möglich ist, die aktuelle Fahrzeugmasse oder die aktuelle Aufbaumasse des Fahrzeugs aus Sensordaten zu bestimmen.

Bei den meisten aus dem Stand der Technik bekannten Verfahren wird die Fahrzeugmasse aus der längsdynamischen Bewegung des Fahrzeugs berechnet, wofür lediglich beispielshalber die DE 69522030 T2 genannt sei. Bei einem aus der DE 103 18 005 A1 bekannten Verfahren hingegen wird die Aufbaumasse über die am Federbeindom gemessenen Kräfte bestimmt. Der Nachteil des erstgenannten Standes der Technik ist, dass bei einer Ermittlung der Fahrzeugmasse über die Längsdynamik sowohl die Antriebskraft des Fahrzeugs als auch die Widerstandskraft (die insbesondere durch Rollwiderstände sowie Fahrtwind und Fahrbahn-Steigung verursacht wird) bekannt sein bzw. berechnet werden muß. Da diese Größen nur ungenau ermittelt werden können, ist die Güte bzw. Genauigkeit der bestimmten Masse nicht sehr hoch. Zudem ist es mit diesen Verfahren nur möglich, die Gesamtmasse des Fahrzeugs zu berechnen. Bei der Ermittlung der Aufbaumasse nach der genannten DE 103 18 005 A1 besteht der Hauptnachteil darin, dass hierbei zusätzliche Kraftmeß-Sensorik für die Bestimmung der Aufbaumasse benötigt wird.

Aus der DE 42 18 087 A1 ist es grundsätzlich bekannt, die Masse eines Fahrzeugs mittels eines auf der Vertikaldynamik basierenden Zustandsbeobachters zu schätzen.

Ein solches günstiges Verfahren zur Bestimmung der Masse eines Fahrzeugs nach dem Oberbegriff des Anspruchs 1 vorteilhaft weiter zu gestalten, ist Aufgabe der vorliegenden Erfindung.

Die Lösung dieser Aufgabe ist dadurch gekennzeichnet, dass die Masse des Fahrzeug-Aufbaus und/oder diejenige der sog. ungefederten Massen und/oder die Massen-Trägheit des Aufbaus um die Fzg.-Längsachse und/oder um die Fzg.-Querachse mittels eines vorzugsweise nichtlinearen Zustandsbeobachters, der die Vertikaldynamik des Fahrzeugs auswertet, bestimmt wird, und dass Anregungen des Fahrzeug-Aufbaus durch Beschleunigungs- und/oder Bremsvorgänge und/oder Lenkmanöver am Fahrzeug über eine Modellierung der Längsdynamik und/oder der Querdynamik entweder über ein physikalisches Modell, insbesondere ein Einspur-oder Zweispurmodell, oder über die gemessene(n) Längsbeschleunigung/en und/oder Querbeschleunigung/en berücksichtigt werden. Vorteilhafte Weiterbildungen sind Inhalt der Unteransprüche.

Grundsätzlich sind Identifikationsverfahren zur Ermittlung eines unbekannten Parameters über einen erweiterten Zustandsbeobachter bekannt. Hierzu kann auf die Literatur verwiesen werden, so bspw. auf [Isermann, R.: Identifikation dynamischer Systeme, Bd. 1 und 2. Springer Verlag, 1987]. In Kenntnis dessen wird nun vorliegend ein solches Identifikationsverfahren vorgeschlagen, das vorzugsweise auf einem nichtlinearen, die Vertikaldynamik des Fahrzeugs auswertenden Zustandsbeobachter basieren kann und mit dem die Aufbaumasse eines Fahrzeugs und/oder dessen sog. ungefederte Massen und/oder Massenträgheiten um die Längsachse und/oder um die Querachse des Fahrzeugaufbaus ermittelt werden können.

Die Basis des Zustandsbeobachters kann allgemein durch ein mathematisches Modell der Vertikaldynamik des Gesamt-Fahrzeugs gebildet sein und es können als Messgrößen im Modellansatz die Aufbaubeschleunigungen und/oder Federwege und/oder Radbeschleunigungen und/oder Aufbaudrehraten berücksichtigt werden. Mathematische Modelle für die Vertikaldynamik eines Gesamtfahrzeugs sind grundsätzlich bekannt, so bspw. aus [Genta,G.: Motor Vehicle Dynamics - Modeling and Simulation. Series on Advances in Mathematics for Applied Sciences - Vol.43. World Scientific Publishing Col Pte. Ltd., 1997 ] oder aus [Mitschke, M.; Dynamik der Kraftfahrzeuge, Band B Schwingungen. Springer-Verlag, Berlin, Heidelberg, New York, Tokyo, Zweite Auflage, 1984].

Alternativ kann anstatt eines vertikaldynamischen Modells des Gesamtfahrzeugs im Falle eines zweispurigen zweiachsigen Fahrzeugs (bspw. Personenkraftwagens) für eine oder mehrere "Fahrzeugecken" ein reduziertes vertikaldynamisches Viertelfahrzeugmodell (für jeweils ein Rad des Fahrzeugs) als Basis des Beobachters verwendet werden. Durch die Verwendung eines solchen sog. Viertelfahrzeugmodells als Basis für den Beobachter kann über das hiermit vorgeschlagene Verfahren die ungefederte Masse und/oder die anteilige Aufbaumasse des Viertelfahrzeugs bestimmt werden. Werden mehrere dieser Viertelfahrzeugbeobachter im Fahrzeug eingesetzt, so kann die Aufbaumasse des Gesamtfahrzeugs durch Addition der ermittelten Viertelfahrzeugmassen bestimmt werden. Zudem wird es bei der Verwendung mehrerer Viertelfahrzeugbeobachter möglich, die Massenverteilung im Fahrzeug zu bestimmen. Eine Bestimmung der Massenträgheiten des Aufbaus ist durch eine Umrechnung der ermittelten Viertelfahrzeugmassen über die Fahrzeuggeometriedaten möglich.

Ein besonderer Vorteil des hiermit vorgeschlagenen Masse-Bestimmungsverfahrens ist es, dass bei der Modellierung der Vertikaldynamik individuell eingebrachte Stellgrößen von aktiven und/oder semiaktiven vertikaldynamischen Fahrwerkregelsystemen und/oder von weiteren Regelsystemen (bspw. Bremsregelsysteme im Sinne einer vorherschauenden Betrachtungsweise) berücksichtigen werden können. (Aktive bzw. semiaktive Fahrwerkregelsystemen sind dem Fachmann bekannt; hierbei kann es sich bspw. um hinsichtlich ihrer Dämpfungscharakteristik einstellbare Dämpfer oder um hydraulische Stellkolben zwischen einem Radführungsglied und dem Fzg.-Aufbau handeln). Ferner können weitere Störgrößen wie z.B. Offsets auf den Sensorsignalen oder die Straßenanregung im Beobachter über eine Störgrößenmodellierung berücksichtigt werden. Dabei kann je nach Modellierungstiefe des Vertikaldynamikmodells dieses linearer oder nichtlinearer Natur sein.

Im Sinne einer vorteilhaften Weiterbildung können darüber hinaus im Beobachteransatz Anregungen des Fahrzeug-Aufbaus durch Beschleunigungsvorgänge und/oder Bremsvorgänge und/oder Lenkmanöver am Fahrzeug bspw. über eine Modellierung der Längsdynamik und/oder der Querdynamik über ein physikalisches Modell, insbesondere ein Einspur-oder Zweispurmodell, berücksichtigt werden. Alternativ ist auch eine Berücksichtigung über die tatsächlich gemessene(n) Längsbeschleunigung(en) und/oder Querbeschleunigung(en) möglich.

In dem im weiteren detaillierter vorgestellten Verfahren wird der allgemeinere Fall der nichtlinearen Modellgleichungen betrachtet, aus dem der lineare Fall leicht abgeleitet werden kann.

Die Modellgleichungen werden mit den Stellgrößen $u$ und den vertikaldynamischen Zustandsgrößen $x$ in abkürzender Schreibweise mit den nichtlinearen oder linearen Systemgleichungen $f$ und den nichtlinearen oder linearen Messgleichungen $h$ wie folgt dargestellt:

$$\dot{x} = f(x,u)$$

$$y = h(x,u)$$

Als Messgrößen $y$ werden bei dem entwickelten Verfahren Aufbaubeschleunigungen und/oder Federwege und/oder Radbeschleunigungen und/oder Aufbaudrehraten verwendet.

Die Grundlage des vorgestellten Verfahrens zur Schätzung der Aufbaumasse und/oder der ungefederten Massen und/oder der Massenträgheiten bildet die Erweiterung der vertikaldynamischen Modellgleichungen um eine Modellierung der/des zu schätzenden Parameter(s). Für jeden zu bestimmenden Parameter $z$ wird hierzu ein Störmodell beliebiger Ordnung mit den Störzuständen $x_S$ angesetzt. Dies entspricht dem Stand der Technik bei der Bestimmung von unbekannten Parametern durch nichtlineare Zustandsbeobachter.

$$\dot{x}_s = A_s x_s$$

$$z = C_s x_s$$

Unter Berücksichtigung der Abhängigkeit der Modellgleichungen von den zu schätzenden Parametern kann das erweiterte Streckenmodell in abkürzender Schreibweise wie folgt dargestellt werden:

$$\begin{bmatrix} \dot{x} \\ \dot{x}_s \end{bmatrix} = \begin{bmatrix} f(x,x_S,u) \\ f(x_S) \end{bmatrix}$$

$$\begin{bmatrix} y \\ z \end{bmatrix} = \begin{bmatrix} h(x,x_S,u) \\ h(x_S) \end{bmatrix}$$

Der Beobachter wird durch die Rückführung der Residuen $r = y - \hat{y}$ (d.h. über die Abweichung zwischen gemessenen und geschätzten Sensorwerten) über die Rückführverstärkungen $L$ auf die Modellgleichungen komplettiert. Die Beobachtergleichungen ergeben sich mit dieser Rückführung zu:

$$\begin{bmatrix} \dot{\hat{x}} \\ \dot{\hat{x}}_s \end{bmatrix} = \begin{bmatrix} f(\hat{x}, \hat{x}_s, u) \\ f(\hat{x}_s) \end{bmatrix} + Lr$$

$$\begin{bmatrix} \hat{y} \\ \hat{z} \end{bmatrix} = \begin{bmatrix} h(\hat{x}, \hat{x}_s, u) \\ h(\hat{x}_s) \end{bmatrix}$$

(wobei das Zeichen "^" wie bei allen Beobachteransätzen üblich für geschätzte Größen steht).

Die Bestimmung der Rückführverstärkungen kann bei dem vorgeschlagenen Verfahren durch unterschiedliche Ansätze durchgeführt werden. Da es sich bei den erweiterten Systemgleichungen aufgrund der Abhängigkeit der vertikaldynamischen Zustandsgrößen von den Massenparametern um nichtlineare Gleichungen handelt, wird vorgeschlagen, einen nichtlinearen Ansatz wie z.B. den Extended Kalman Filter oder Unscented Kalman Filter zur Bestimmung der Rückführverstärkungen zu verwenden.

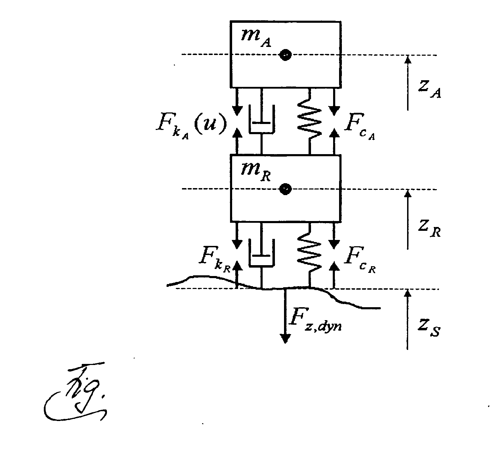

Als konkreteres Anwendungsbeispiel wird im weiteren die Bestimmung der Aufbaumasse eines sog. Viertel-Fahrzeugs mit semiaktiver Verstell-Dämpferregelung beschrieben. Das zugehörige Viertel-Fahrzeug-Modell ist in der beigefügten einzigen Figur dargestellt, aus der gleichzeitig die einzelnen Kenngrößen klar ersichtlich werden.

Dabei ist mit dem Buchstaben "z" eine Wegstrecke in Vertikalrichtung bezeichnet, wobei jedoch jeweils ein Index hinzugefügt ist, und zwar der Index S für die Straße bzw. Fahrbahn (=> $z_S$), der Index R für das Rad (=> $z_R$), und der Index A für den Fahrzeug-Aufbau (=> $z_A$). An späterer Stelle werden noch die zeitlichen Ableitungen dieser Größen benötigt, die wie üblich durch bspw. $\dot{z}_A$ für die erste Ableitung (d/dt) und durch bspw. $\ddot{z}_A$ für die zweite Ableitung (d$^2$/dt$^2$) dargestellt werden. Dabei darf dieser stets mit einem Index (S bzw. R bzw. A) versehene Buchstabe z nicht mit dem hier ohne Index verwendeten Buchstaben z verwechselt werden, der - wie in der Regelungstechnik üblich - für den zu schätzenden Parameter steht. Wenn also in der vorliegenden Beschreibung der Buchstabe z ohne Index verwendet wird, so stellt dieser den zu schätzenden Parameter dar.

In der Figur sowie im weiteren ist mit $m_A$ die Masse des Fahrzeug-Aufbaus und mit $m_R$ die Masse des Rades bezeichnet. Mit $F_C$ sind Federkräfte bezeichnet, und zwar mit dem weiteren Index A diejenige zwischen dem Rad und dem Fzg.-Aufbau, und mit dem weiteren Index R diejenige des selbst Federungseigenschaften aufweisenden Rades. Analog sind die jeweiligen Dämpfkräfte $F_k$ weiter indiziert, wobei die Dämpfkraft $F_{k,A}$ des zwischen dem Rad und dem Fzg.-Aufbau befindlichen Dämpfers von der Relativgeschwindigkeit u zwischen dem Aufbau und dem jeweiligen Rade abhängig ist.

Aus diesem Viertel-Fahrzeugmodell ergeben sich somit durch Ansetzen der Schnittkräfte und Aufstellung der Kräftegleichgewichte die vertikaldynamischen Modellgleichungen des Viertelfahrzeugs somit zu:

$$m_A \ddot{z}_A = -F_{k_A}(\dot{z}_A - \dot{z}_R, u) - F_{c_A}(z_A - z_R)$$

$$m_R \ddot{z}_R = F_{k_A}(\dot{z}_A - \dot{z}_R, u) + F_{c_A}(z_A - z_R) - F_{k_R}(\dot{z}_R - \dot{z}_S) - F_{c_R}(z_R - z_S)$$

Die Aufbaumasse wird über eine Fahrt als konstant angenommen: $\dot{m}_A = 0$. Die erweiterten Modellgleichungen ergeben sich hiermit zu.

$$\ddot{z}_A = \frac{\left(-F_{k_A}(\dot{z}_A - \dot{z}_R, u) - F_{c_A}(z_A - z_R)\right)}{m_A}$$

$$\ddot{z}_R = \frac{\left(F_{k_A}(\dot{z}_A - \dot{z}_R, u) + F_{c_A}(z_A - z_R) - F_{k_R}(\dot{z}_R - \dot{z}_S) - F_{c_R}(z_R - z_S)\right)}{m_R}$$

$$\dot{m}_A = 0$$

Als Messgrößen stehen dem Beobachter die Aufbaubeschleunigung $\ddot{z}_A$ und die Radbeschleunigung $\ddot{z}_R$ zur Verfügung.

Mit dem Zustandsgrößenvektor x = $[z_A \ \dot{z}_A \ z_R \ \dot{z}_R]^T$ ,der Dämpferstellgröße $u$, dem Störzustand $x_S$ = $[m_A]$, den Messgrößen $y$ = $[\ddot{z}_A \ \ddot{z}_R]^T$ und dem zu schätzenden Parameter $z$=$[m_A]$ können die Modellgleichungen des Viertelfahrzeugs auf die folgende Form gebracht werden:

$$\begin{bmatrix} \dot{x} \\ \dot{x}_s \end{bmatrix} = \begin{bmatrix} f(x, x_S, u) \\ f(x_S) \end{bmatrix}$$

$$\begin{bmatrix} y \\ z \end{bmatrix} = \begin{bmatrix} h(x, x_S, u) \\ h(x_S) \end{bmatrix}$$

Auf diese Systemgleichungen wird der Extended Kalman Filter Algorithmus, der z.B. aus [Welch, G.; Bishop, G.: An Introduction to the Kalman Filter, SIGGRAPH 2001. Course 8, 2001] oder [Gelb, A.; Applied Optimal Estimation, MIT Press, 1994] oder aus [Maybeck, P.S.; Stochastic Models, Estimation and Control, Volume 1, Academic Press, Inc., New York, 1997] bekannt ist, angewendet. Dieser liefert in jedem Iterationsschritt eine neue Rückführverstärkung L für den Zustandsbeobachter

$$\begin{bmatrix} \dot{\hat{x}} \\ \dot{\hat{x}}_s \end{bmatrix} = \begin{bmatrix} f(\hat{x}, \hat{x}_S, u) \\ f(\hat{x}_S) \end{bmatrix} + Lr$$

$$\begin{bmatrix} \hat{y} \\ \hat{z} \end{bmatrix} = \begin{bmatrix} h(\hat{x}, \hat{x}_S, u) \\ h(\hat{x}_S) \end{bmatrix}$$

Im Fahrzeug wird für jede Fahrzeugecke bzw. für den Bereich jeden Rades (vorne links =VL, vorne rechts = VR, hinten links = HL, hinten rechts = HR) einer dieser Beobachter umgesetzt. Die geschätzte Gesamtmasse des Fahrzeugs kann anschließend über Summation der anteiligen Viertelfahrzeugmassen berechnet werden:

$m_{gesamt}$ = $\hat{z}_{VL} + \hat{z}_{VR} + \hat{z}_{HL} + \hat{z}_{HR}$ , wobei hier - abweichend von den Ausführungen weiter oben - der Buchstabe z trotz Verwendung eines Index (nämlich VL, VR, HL, HR) für den zu schätzenden Parameter, nämlich die Aufbau-Masse $m_A$ steht. Man kann also auch wie folgt schreiben:

$$m_{gesamt} = m_{A,VL} + m_{A,VR} + m_{A,HL} + m_{A,HR}$$

Vorgeschlagen wird weiterhin ein Verfahren zur Ansteuerung eines semiaktiven oder aktiven Fahrwerkregelsystems eines Fahrzeugs, dessen Masse oder Masse-Anteil nach dem Verfahren nach einem der vorangegangenen Ansprüche bestimmt wird, wobei bei der Ansteuerung die dynamische Radlast berücksichtigt wird, die aus dem Kräftegleichgewicht zwischen der auf den Fzg.-Aufbau wirkenden Kraft und der auf das Rad wirkenden Kraft unter Berücksichtigung der jeweiligen Massen ermittelt wird. Für die Regelung eines semiaktiven Fahrwerkregelsystems kann es nämlich (insbesondere abhängig vom gewählten Regelungsansatz) vorteilhaft sein, die aktuelle dynamische Radlast zu berücksichtigen, um hohe Schwankungen dieses Werts zu unterbinden.

Eine aus der physikalischen Modellierung bekannte Möglichkeit, die dynamische Radlast, welche der dynamischen Aufstandskraft $F_{z,dyn}$ (vgl. Abbildung) entspricht, zu ermitteln, basiert auf dem Kräftegleichgewicht der auf den Aufbau wirkenden Kraft $m_A \ddot{z}_A$, der auf das Rad wirkenden Kraft $m_R \ddot{z}_R$ und der dynamischen Aufstandskraft $F_{z,dyn}$, die über den Reifen auf die Fahrbahn wirkt:

$$F_{z,dyn} = m_A \ddot{z}_A + m_R \ddot{z}_R$$

Aus obiger Gleichung ist ersichtlich, dass die dynamische Radlast bei bekannter Aufbau- und Radbeschleunigung ermittelt werden kann, wenn die anteilige Aufbaumasse $m_A$ des Viertelfahrzeugs und die ungefederte Masse $m_R$ bekannt sind. Diese zu ermitteln ist über das vorgeschlagene Verfahren möglich. Da es bei dem vorgeschlagenen Verfahren zudem möglich ist, neben der Bestimmung der Massen auch eine nicht gemessene Radbeschleunigung und oder Aufbaubeschleunigung zu ermitteln, kann über obigen Ansatz zur Bestimmung der dynamischen Radlast neben mindestens einer der eingehenden Massen auch mindestens eine der eingehenden Beschleunigungen über das vorgeschlagene Verfahren ermittelt werden.

Mit dem vorgeschlagenen Verfahren ist es (zusammenfassend) also möglich, ohne zusätzlicher, über den Umfang bei üblichen Serienfahrzeugen hinausgehender Sensorik (insbesondere an aktiven oder semiaktiven Fahrwerkregelsystemen) die Masse des Fahrzeugs bzw. Fahrzeug-Aufbaus bzw. sogar radindividuellen Abschnitten hiervon zu bestimmen. Weiterhin können auch die Massenträgheiten um die Längsachse und/oder die Querachse des Fahrzeugaufbaus sowie die ungefederten Massen bestimmt werden. Dabei kann die Berechnung der Aufbaumasse und/ oder der ungefederten Massen auf mehrere elektronische Steuergeräte aufgeteilt werden, indem für die jeweiligen Fahrzeugecken ein Viertelfahrzeugbeobachter umgesetzt wird. Somit ist es möglich, bei der Ermittlung der Aufbaumasse über mehrere Viertelfahrzeugbeobachter die Massenverteilung im Fahrzeug zu bestimmen, wobei noch darauf hingewiesen sei, dass durchaus eine Vielzahl von Details abweichend von obigen Erläuterungen gestaltet sein kann, ohne den Inhalt der Patentansprüche zu verlassen.

Ergänzend zu den Ausführungen weiter oben zu den verwendeten und teilweise in der beigefügten einzigen Figur enthaltenen Formelzeichen werden im Folgenden nochmals die in der Figur enthaltenen Formelzeichen kurz erläutert:

| | |
|---|---|
| $m_A$ | Masse des Fahrzeug-Aufbaus |
| $m_R$ | ungefederte Masse |
| $z_A$ | Weg bzw. inertiale Position des Aufbaus in Vertikalrichtung |
| $z_R$ | Weg / inertiale Position der ungefederten Masse in Vertikalrichtung |
| $z_S$ | Weg / inertiale Position der Fahrbahn in Vertikalrichtung |
| $F_{kA}$ | Dämpfkraft zwischen Fzg.-Aufbau und ungefederter Masse |
| $F_{cA}$ | Federkraft zwischen Fzg.-Aufbau und ungefederter Masse |
| $F_{kR}$ | Dämpfkraft zwischen ungefederter Masse und Fahrbahn |
| $F_{cR}$ | Federkraft zwischen ungefederter Masse und Fahrbahn |
| $F_{z,dyn}$ | dynamische Radlast bzw. Aufstandskraft |

**Patentansprüche**

1. Verfahren zur Bestimmung der Masse eines Fahrzeugs oder eines radindividuellen Massenanteils eines Fahrzeugs mit einer Vertikalbewegungen zwischen dem Fahrzeug-Aufbau und den Fahrzeug-Rädern ermöglichenden Radaufhängung, wobei die Massen-Schätzung mittels eines auf der Vertikaldynamik des Fahrzeugs basierenden Zustandsbeobachters durchgeführt wird,
**dadurch gekennzeichnet, dass** die Masse des Fahrzeug-Aufbaus und/oder diejenige der sog. ungefederten Massen und/oder die Massen-Trägheit des Aufbaus um die Fzg.-Längsachse und/oder um die Fzg.-Querachse mittels eines vorzugsweise nichtlinearen Zustandsbeobachters, der die Vertikaldynamik des Fahrzeugs auswertet, bestimmt wird, und dass Anregungen des Fahrzeug-Aufbaus durch Beschleunigungs- und/oder Bremsvorgänge und/oder Lenkmanöver am Fahrzeug über eine Modellierung der Längsdynamik und/oder der Querdynamik entweder über ein physikalisches Modell, insbesondere ein Einspur- oder Zweispurmodell, oder über die gemessene(n) Längsbeschleunigung/en und/oder Querbeschleunigung/en berücksichtigt werden.

2. Verfahren nach Anspruch 1, **dadurch gekennzeichnet, dass** die Basis des Zustandsbeobachters durch ein mathematisches Modell der Vertikaldynamik des Gesamt-Fahrzeugs gebildet ist und als Messgrößen im Modellansatz die Aufbaubeschleunigungen und/oder Federwege und/oder Radbeschleunigungen und/oder Aufbaudrehraten berücksichtigt werden.

3. Verfahren nach Anspruch 1, **dadurch gekennzeichnet, dass** bei einem zweispurigen zweiachsigen Fahrzeug die Basis des Zustandsbeobachters durch ein mathematisches Modell der Vertikaldynamik eines Viertel-Fahrzeugs mit nur einem Rad gebildet ist und als Messgrößen im Modellansatz die Aufbaubeschleunigung und/oder ein Federweg und/oder die Radbeschleunigungen und/oder die aus der Aufbaudrehrate abgeleitete Aufbaugeschwindigkeit berücksichtigt wird/werden.

4. Verfahren nach einem der vorangegangenen Ansprüche**, dadurch gekennzeichnet, dass** neben den Messgrößen und vertikaldynamischen Zustandsgrößen auch Stellgrößen für semiaktive oder aktive Fahrwerk-Regelsysteme berücksichtigen werden.

5. Verfahren nach einem der vorangegangenen Ansprüche, **dadurch gekennzeichnet, dass** weitere Störgrößen wie z.B. Offsets auf den Sensorsignalen oder die Straßenanregung im Beobachter über eine Störgrößenmodellierung berücksichtigt werden.

6. Verfahren zur Ansteuerung eines semiaktiven oder aktiven Fahrwerkregelsystems eines Fahrzeugs, dessen Masse oder Masse-Anteil nach dem Verfahren nach einem der vorangegangenen Ansprüche bestimmt wird, **dadurch gekennzeichnet, dass** bei der Ansteuerung die dynamische Radlast berücksichtigt wird, die aus dem Kräftegleichgewicht zwischen der auf den Fzg.-Aufbau wirkenden Kraft und der auf das Rad wirkenden Kraft unter Berücksichtigung der jeweiligen Massen ermittelt wird.

7. Verfahren nach Anspruch 6, **dadurch gekennzeichnet, dass** auch die Beschleunigung des Fzg.-Aufbaus und/ oder Fzg.-Rades über das in den Ansprüchen 1 - 5 beschriebene Beobachter-Modell bestimmt wird.

**Claims**

1. A method for determining the mass of a vehicle or a mass fraction of a vehicle especially to a wheel, with a wheel suspension allowing vertical movements between the vehicle structure and the vehicle wheels, the estimation of the mass being carried out by means of a status monitor based on the vertical dynamics of the vehicle, **characterised in that** the mass of the vehicle structure and/or that of the so-called unsprung masses and/or the mass inertia of the structure about the vehicle longitudinal axis and/or about the vehicle transverse axis are determined by means of a preferably non-linear status monitor, which evaluates the vertical dynamics of the vehicle, and **in that** stimulations of the vehicle structure are taken into account by means of acceleration and/or braking processes and/or steering manoeuvres at the vehicle by means of a modelling of the longitudinal dynamics and/or of the transverse dynamics either by means of a physical model, more especially a one-track or two-track model, or by means of the measured longitudinal acceleration(s) and/or transverse acceleration(s).

2. A method according to claim 1, **characterised in that** the basis of the status monitor is formed by a mathematical model of the vertical dynamics of the total vehicle, and the structure accelerations and/or suspension travels and/or wheel accelerations and/or structure turning rates are taken into account in the model approach as measurement variables.

3. A method according to claim 1, **characterised in that** in a two-track, two-axle vehicle, the basis of the status monitor is formed by a mathematical model of the vertical dynamics of a quarter vehicle with only one wheel and the structure acceleration and/or a suspension travel and/or the wheel accelerations and/or the structure speed derived from the structure turning rate is/are taken into account in the model approach as measurement variables.

4. A method according to any one of the preceding claims, **characterised in that** control variables for semi-active or active chassis control systems are also taken into account in addition to the measurement variables and vertical dynamic status variables.

5. A method according to any one of the preceding claims, **characterised in that** further disturbance variables such as, for example, offsets on the sensor signals or the road stimulation in the monitor are taken into account by means of a disturbance variable modelling.

6. A method for activating a semi-active or active chassis control system of a vehicle, the mass or mass fraction of which is determined by a method according to any one of the preceding claims, **characterised in that** in the activation, the dynamic wheel load is taken into account that is determined from the force balance between the force acting on the vehicle structure and the force acting on the wheel, taking into account the respective masses.

7. A method according to claim 6, **characterised in that** the acceleration of the vehicle structure and/or vehicle wheel is also determined by means of the monitor model described in claims 1 to 5.

**Revendications**

1. Procédé pour déterminer la masse d'un véhicule ou d'une partie de masse d'une roue individuelle d'un véhicule avec une suspension de roue permettant des mouvements verticaux entre la superstructure du véhicule et les roues du véhicule, l'évaluation des masses se faisant à l'aide d'un observateur d'état, fondé sur la dynamique verticale du véhicule,
   **caractérisé en ce qu'**
   on détermine la masse de la superstructure du véhicule et/ou celle des masses non suspendues et/ou de l'inertie de la superstructure autour de l'axe longitudinal du véhicule et/ou autour de l'axe transversal du véhicule à l'aide d'un observateur d'état, de préférence non linéaire, qui exploite la dynamique verticale du véhicule, et
   on tient compte des excitations de la superstructure du véhicule par des opérations d'accélération et/ou de freinage et/ou des manoeuvres de direction appliquées au véhicule par une modélisation de la dynamique longitudinale et/ou de la dynamique transversale, par un modèle physique notamment un modèle à une voie ou à deux voies ou par les accélérations longitudinales mesurées et/ou les accélérations transversales mesurées.

2. Procédé selon la revendication 1,
   **caractérisé en ce que**
   la base de l'observateur d'état est formée par un modèle mathématique de la dynamique verticale de l'ensemble du véhicule, et comme grandeurs de mesure dans le projet de modèle, on tient compte des accélérations de la superstructure et/ou des courses de ressort et/ou des accélérations de roue et/ou des vitesses de rotation de la superstructure.

3. Procédé selon la revendication 1,
   **caractérisé en ce que**
   dans le cas d'un véhicule à deux essieux et à deux voies, le fondement de l'observateur d'état est réalisé par un modèle mathématique de la dynamique verticale d'un quart du véhicule avec seulement une roue et comme grandeurs de mesure dans le projet de modèle, on tient compte de l'accélération de la superstructure et/ou d'une course de ressort et/ ou des accélérations de roue et/ ou de la vitesse de la superstructure déduite de la vitesse de rotation de la superstructure.

4. Procédé selon les revendications précédentes,
   **caractérisé en ce qu'**
   à côté des grandeurs de mesure et des grandeurs d'état en dynamique verticale, on tient également compte de grandeurs de réglage de systèmes de régulation semi-actifs ou actifs du châssis.

5. Procédé selon les revendications précédentes,
   **caractérisé en ce qu'**
   on tient compte d'autres grandeurs perturbatrices telles que par exemple le décalage par rapport aux signaux des capteurs ou à l'excitation par la chaussée dans l'observateur, par une modélisation des grandeurs perturbatrices.

6. Procédé de commande d'un système de régulation semi-actif ou actif du châssis d'un véhicule dont on détermine la masse ou la fraction de masse selon le procédé de l'une quelconque des revendications précédentes,
   **caractérisé en ce que**

lors de la commande, on tient compte de la charge de roue, dynamique qui se détermine à partir de l'équilibre des forces entre la force agissant sur la superstructure du véhicule et la force agissant sur la roue en tenant compte des masses respectives.

7. Procédé selon la revendication 6,
   **caractérisé en ce qu'**
   on détermine l'accélération de la superstructure du véhicule et/ou de la roue du véhicule par le modèle d'observateur décrit aux revendications 1 à 5.

$m_A$

$z_A$

$F_{k_A}(u)$

$F_{c_A}$

$m_R$

$z_R$

$F_{k_R}$

$F_{c_R}$

$F_{z,dyn}$

$z_S$

Fig.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69522030 T2
- DE 10318005 A1
- DE 4218087 A1

**In der Beschreibung aufgeführte Nicht-Patentliteratur**

- **ISERMANN, R.** Identifikation dynamischer Systeme. Springer Verlag, 1987, vol. 1, 2
- Motor Vehicle Dynamics - Modeling and Simulation. **GENTA,G.** Series on Advances in Mathematics for Applied Sciences. World Scientific Publishing Col Pte. Ltd, 1997, vol. 43
- **MITSCHKE, M.** Dynamik der Kraftfahrzeuge, Band B Schwingungen. Springer-Verlag, 1984
- **WELCH, G. ; BISHOP, G.** An Introduction to the Kalman Filter. *SIGGRAPH 2001,* 2001, vol. 8
- **GELB, A.** Applied Optimal Estimation. MIT Press, 1994
- **MAYBECK, P.S.** Stochastic Models, Estimation and Control. Academic Press, Inc, 1997, vol. 1